# EUROPEAN PATENT SPECIFICATION

(11) **EP 3 149 881 B1**
(45) Date of publication and mention of the grant of the patent: **10.07.2019**
(21) Application number: 15799821.2
(22) Date of filing: 23.03.2015
(51) Int. Cl.: H04L 9/00, H04L 29/06, H04L 29/08, G06F 15/16

(54) **GEOGRAPHICALLY ADVANTAGEOUS CLOUD CACHING**
GEOGRAPHISCH VORTEILHAFTEE CLOUD-ZWISCHENSPEICHERUNG
MISE EN ANTÉMÉMOIRE DANS UN NUAGE INFORMATIQUE POUR GAGNER DES AVANTAGES GÉOGRAPHIQUES

(30) Priority: 28.05.2014 US 201462003667 P
(43) Date of publication of application: 05.04.2017
(73) Proprietor: Telefonaktiebolaget LM Ericsson (publ), 164 83 Stockholm (SE)
(72) Inventor: KÖLHI, Johan, S-185 39 Vaxholm (SE); HUBER, Michael, S-187 42 Taby (SE); SKOG, Robert, S-165 76 Hässelby (SE)
(74) Representative: Ericsson
(86) International application number: PCT/SE2015/050339
(87) International publication number: WO 2015/183151

(56) References cited:
- US-A1- 2009 271 613
- US-A1- 2009 271 613
- US-A1- 2012 117 563
- US-A1- 2012 117 563
- US-A1- 2012 239 725
- US-A1- 2012 239 725
- US-A1- 2013 138 957
- MIGAULT ORANGE LABS R(OEB_ENTITY_AMPERSAND)AMP D ET AL: "IPsec mobility and multihoming requirements : Problem statement; draft-mglt-ipsec-mm-requirements-00.txt", IPSEC MOBILITY AND MULTIHOMING REQUIREMENTS : PROBLEM STATEMENT; DRAFT-MGLT-IPSEC-MM-REQUIREMENTS-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 1 September 2009 (2009-09-01), XP015064293, [retrieved on 2009-09-24]

## Description

### TECHNICAL FIELD

The proposed technology generally relates to provision of web services to a client e.g. concering cloud caching in HTTPS (Hypertext Transfer Protocol Secure) enabled communication systems.

### BACKGROUND

With the increasing use of software applications designed to run on smartphones, tablets and other mobile devices, users are generally interacting with their smartphones in two different ways; either through native applications running on their phones or using a browser and a web page possibly implemented in the phone as a so-called web application.

A native application is installed directly onto the device and users typically acquire these applications through an online store. Native applications run fast and smoothly on the user's device since the data used by the application can be stored locally, and native code can be used instead of interpreted code. The programmer has access to application programming interfaces to render graphics quickly using a built-in graphics processing unit.

Instead of using a native application, the users can choose to visit a web page using a browser or a web application. Many services today can be accessed both ways; for instance, Facebook can be accessed by using a native application as well as by visiting the Facebook homepage from the browser. Historically, browsing was quite slow since every click resulted in a request to the web server, and the user would have to wait for the content to return. Today, small scripting programs typically written in the JavaScript are downloaded to the user device and run locally. This means that tedious round-trip times of the network often can be avoided and JavaScript based webpages can be almost as responsive as a native application. While native applications still have an advantage when it comes to high demanding applications such as games, the gap between web applications and native applications has been narrowing.

In this context it is relevant to discuss cloud computing and cloud caching.

The term cloud computing in its most general meaning is used to describe the concept of using computing resources e.g. hardware and software that are delivered as a service over a network e.g. Internet. The name is derived from the nowadays-common use of a cloud as an abstraction for the complex infrastructure it contains in system diagrams. Another way of formulating it is that cloud computing enables convenient, on-demand network access to a shared pool of configurable computing resources (e.g. networks, servers, storage, applications, and services) that can be rapidly provisioned and released with minimal management effort or service provider interaction. Typically, cloud computing is described as a stack due to the number of services built on top of each other. These services can be divided into three main models, namely Software as a Service (SaaS), Platform as a Service (PaaS), and Infrastructure as a Service (laaS), where laaS is the most basic model.

A prevalent trend in today's communication systems is utilizing the cloud and so-called cloud computing which involves distributed computing over a network. Consequently, a program or application may run on many connected computers at the same time. It specifically refers to a computing hardware machine or group of computing hardware machines commonly referred as a server connected through a communication network such as the Internet, an intranet, a local area network (LAN) or wide area network (WAN). Any individual user who has permission to access the server can use the server's processing power to run an application, store data, or perform any other computing task. Therefore, instead of using a personal computer every-time to run the application, the individual can now run the application from anywhere in the world, as the server provides the processing power to the application and the server is also connected to a network via internet or other connection platforms to be accessed from anywhere.

Network-based services, which appear to be provided by real server hardware and are in fact served up by virtual hardware simulated by software running on one or more real machines, are often called cloud computing. Such virtual servers do not physically exist and can therefore be moved around and scaled up or down on the fly without affecting the end user, somewhat like a cloud becoming larger or smaller without being a physical object.

In a mobile context, cloud based solutions also have disadvantages. One disadvantage is the latency in accessing information. For example, when content is selected for use, it takes a finite amount of time for the content to be downloaded to the device before the user may access the content (for example, downloading a song). To overcome this delay, solutions that rely on partial downloading of information to the mobile device have been proposed. For example, the beginning of the content may be stored locally (thereby saving storage space) and the rest of the content may be downloaded while the beginning of the content may be accessed. As the amount of content a subscriber has grows and as more data intensive content (e.g. video) becomes a greater fraction of the content accessed, this solution cannot adequately address the reduction in mobile cloud user experience.

One solution is so-called transparent Internet caching which is a common technology to speed up web site access and reduce network usage. This technology works well with static web pages but lacks support for dynamic, server side rendering of web pages. These dynamic web pages are getting more and more common. New protocols running over HTTP are also hard to cache, in many cases it is impossible.

HTTPS which is an abbreviation of Hypertext Transfer Protocol Secure is a communications protocol for secure communication over a computer network, with especially wide deployment on the Internet. Technically, it is not a protocol in and of itself; rather, it is the result of simply layering the Hypertext Transfer Protocol (HTTP) on top of a security protocol such as the SSL/TLS (secure sockets layer/transport layer security) protocol, thus in this case adding the security capabilities of SSL/TLS to standard HTTP communications.

The security of HTTPS is therefore depending on the underlying TLS, which uses long term public and secret keys to exchange a short term session key to encrypt the data flow between client and server.

TLS is a protocol that ensures privacy between communicating applications and their users on the Internet. When a server and a client communicate, TLS ensures that no third party may eavesdrop or tamper with any message. TLS is the successor to the Secure Sockets Layer (SSL) protocol.To guarantee that a user is authentic, so called X.509 certificates are used. As a consequence, certificate authorities and a public key infrastructure is necessary to verify the relation between the owner of a certificate and the certificate, as well as to generate, sign, and administer the validity of certificates.

In its popular deployment on the internet, HTTPS provides authentication of the web site and associated web server that one is communicating with, which protects against man-in-the-middle attacks. Additionally, it provides bidirectional encryption of communications between a client and server, which protects against eavesdropping and tampering with and/or forging the contents of the communication. In practice, this provides a reasonable guarantee that one is communicating with precisely the web site that one intended to communicate with (as opposed to an imposter), as well as ensuring that the contents of communications between the user and site cannot be read or forged by any third party.

The above mentioned problem of cloud caching becomes very apparent when implementing HTTPS. Traditional caching will not work when HTTPS is enabled, the alternative is to cache the site / application further out in the network. This adds another problem with the encryption instead - in order for this to work, the secret encryption keys and certificates must be spread across all the caching nodes.

US2009/0271613 A1 discloses a content-based load balancer where the load balancer moves a connection from the client in an up streamed direction towards a selected target stack. Hence, US2009/0271613 does not relate to a connection down streams as in the cloud caching situation.

Further relevant prior art exists in the article authored by Migault Orange Labs R&D and titled "IPsec mobility and multihoming requirements : Problem statement; draft-mglt-ipsec-mm-requirements-OO.txt"; IPSECME Working Group, Internet-Draft, which discloses requirements to extend mobility and multihoming facilities. This includes the use of simultaneous IP addresses as well as other IPsec mode like transport mode.

Consequently, there is a need for solutions enabling cloud caching when using HTTPS which overcomes the above mentioned problems.

### SUMMARY

It is an object to provide a solution to the above described problems.

This and other objects are met by embodiments of the proposed technology.

According to a first aspect, there is provided a method as defined in claim 1.

According to a second aspect, there is provided a system as defined in claim 5.

According to further aspects there are provided computer programs as defined in claim 10.

Embodiments of the proposed technology enables/makes it possible to migrate authenticated TCP sessions and enable automatic cloud caching for HTTPS enabled communication systems.

Other advantages will be appreciated when reading the detailed description.

### BRIEF DESCRIPTION OF THE DRAWINGS

The embodiments, together with further objects and advantages thereof, may best be understood by making reference to the following description taken together with the accompanying drawings, in which:
FIG. 1 is a box chart of an embodiment of the proposed technology;
FIG. 2 is a box chart of another embodiment of the proposed technology;
FIG. 3 is a signaling chart of an embodiment of the proposed technology;
FIG. 4 is a flow chart of an embodiment of a method in a primary network node of the proposed technology;
FIG. 5 is a flow chart of an embodiment of a method in a secondary network node of the proposed technology;
FIG. 6 is a flow chart of an embodiment of a method in a client node of the proposed technology;
FIG. 7 is a box chart of embodiments of a client node, a primary network node and a secondary network node of the proposed technology;
FIG. 8 is a box chart of part of the embodiment of FIG. 7;
FIG. 9 is a box chart of part of the embodiment of FIG. 7;
FIG. 10 is a box chart of part of the embodiment of FIG. 7;
FIG. 11 is an illustration of an embodiment of a computer implementation of a primary network node of the proposed technology;
FIG. 12 is an illustration of another embodiment of a computer implementation of a secondary network node of the proposed technology;
FIG. 13 is an illustration of another embodiment of a computer implementation of a client node of the proposed technology;
FIG. 14 is an illustration of an embodiment of a computer program in a primary network node of the proposed technology;
FIG. 15 is an illustration of another embodiment of a computer program in a secondary network node of the proposed technology;
FIG. 16 is an illustration of another embodiment of a computer program in a client node of the proposed technology;
FIG. 17 is an illustration of an embodiment of a primary network node with functional modules of the proposed technology;
FIG. 18 is an illustration of an embodiment of a secondary network node with functional modules of the proposed technology;
FIG. 19 is an illustration of an embodiment of a client node with functional modules of the proposed technology.

### DETAILED DESCRIPTION

Throughout the drawings, the same reference designations are used for similar or corresponding elements.

As mentioned previously, for regular HTTP, traffic passing multiple nodes can be locally stored or cached. However, for HTTPS this is not possible, since all communication takes place using authenticated TLS/TCP sessions, i.e. a TLS session on top of TCP (Transmission Control Protocol).In HTTPS all traffic is encrypted using a temporary key for each HTTP session. All traffic is thereby encrypted as it passes a managed session provider, and since the keys are changing it is not possible to determine whether the content can be cached or if the request content has been previously retrieved. For streamed web services this becomes particularly troublesome since each authentication handshake takes time and might interrupt communication or service provision of a streamed service.The inventors have identified the possibility to enable a primary network node or server or central site to migrate an already authenticated TLS/TCP session associated with a client node to another server or secondary node or clached ("cloud cache" - a combination of site caching and static content caching) slave site in the system. Thereby, the potential delay or interruption of a streamed service is reduced or eliminated whilst maintain a secure transfer of information. Instead of having to repeat a TLS authentication/handshake process, already agreed TLS session keys can be migrated to a new server or node, thereby speeding up the resumption of the service. In addition, this process can take place without the client being aware of it.

The reasons for migrating a session can be varying from case to case, and also from system to system. It can include factors such as congestion or load or load balancing in the system as a whole or in a particular node or layer, or could be based on a geographical location or other such parameter of the client node and/or the site itself.

The decision to migrate a session can be taken by the central site or primary network node or by a clached slave site or secondary network node. In addition, the migration can be of a complete site or for part of a site or application depending on the circumstances.

In short, the proposed technology introduces a new concept for session authentication with HTTPS/TLS. The idea is that an end user client access the main server initially that takes care of the TLS handshake/authentication and then migrates the live TCP session with the handshake TLS session keys to the slave node in the network. Thereby the proposed technology handles web site cloud caching automatically - it needs no special configuration to set up. This distributed site module is developed and owned by the origin site directly - it is a trusted extension of the origin site that is being executed inside the operator network. Consequently, the HTTPS/TLS extension according to the proposed technology adds centrally controlled secure encryption for cloud caching without distributing the HTTPS certificates.

The proposed technology provides a primary network node/server/centralsite configured to provide a service to authenticated client nodes, wherein the primary network node/server/central site is configured to temporarily suspend an ongoing and already authenticated/verified TCP session and migrate the TCP session together with agreed TLS keys or parameters to a slave site/secondary network node/clached slave site.

Further, the proposed technology provides a clache slave/slave/secondary network node configured to provide a service to authenticated client nodes, wherein the secondary network node/clache slave/slave is configured to receive a migrated temporarily suspended TCP session for a client node together with agreed TLS keys or parameters from a central site/server/primary network node and to un-suspend the TCP session and resume/establish the TCP session with the client node based on the already authenticated TLS keys or parameters.

The clache slave/slave/secondary network node can comprise a downsized or simplified or stripped version of the central site/primary network node, or correspond to a node with the same capabilities as the central site.

The proposed technology may be applied to a user terminal or a node, which may be a wired or wireless device.

The central site or primary network node can comprise a web server or a managed server provider (MSP) with extra capabilities to execute slave sites or clached sites typically virtual machines associated with a hypervisor.

The proposed technology is particularly useful in environments where authenticated TLS/TCP sessions are typically long and may need to be or may beneficially be moved out from a central site or provider and be relocated at a slave site which is e.g. geographically closer to an end user. One example could be an authenticated web-application such as Facebook or similar, where a central site can export a slave application to a slave site in order to e.g. redistribute load in the system. By using the proposed technology a user e.g. a Facebook client can authenticate (i.e. verify) its session at the central site and the session can be moved to a slave site and the client communicates with the slave site. The slave site in turn is configured to update content from other clients than the particular client via the central site, whereas the client can update her/his content via the slave site.

As used herein, the non-limiting terms "client node", "User Equipment" and "wireless device" may refer to a mobile phone, a cellular phone, a Personal Digital Assistant, PDA, equipped with radio communication capabilities, a smart phone, a laptop or Personal Computer, PC, equipped with an internal or external mobile broadband modem, a tablet with radio communication capabilities, a target device, a device to device UE, a machine type UE or UE capable of machine to machine communication, iPAD, customer premises equipment, CPE, laptop embedded equipment, LEE, laptop mounted equipment, LME, USB dongle, a portable electronic radio communication device, a sensor device equipped with radio communication capabilities or the like. In particular, the term "UE" and the term "wireless device" should be interpreted as non-limiting terms comprising any type of wireless device communicating with a radio network node in a cellular or mobile communication system or any device equipped with radio circuitry for wireless communication according to any relevant standard for communication within a cellular or mobile communication system.

The term "wired device" may refer to any device configured or prepared for wired connection to a network. In particular, the wired device may be at least some of the above devices, with or without radio communication capability, when configured for wired connection.

As used herein, the non-limiting term "network node" may refer to servers, base stations, network control nodes such as network controllers, radio network controllers, base station controllers, and the like. In particular, the term "base station" may encompass different types of radio base stations including standardized base stations such as Node Bs, or evolved Node Bs, eNBs, and also macro/micro/pico radio base stations, home base stations, also known as femto base stations, relay nodes, repeaters, radio access points, base transceiver stations, BTSs, and even radio control nodes controlling one or more Remote Radio Units, RRUs, or the like.

Optionally, the wireless device, UE, network node may also include communication circuitry. The communication circuitry may include functions for wired and/or wireless communication with other devices and/or network nodes in the network. In a particular example, the wireless device, UE, network node may include radio circuitry for communication with one or more other nodes, including transmitting and/or receiving information. The communication circuitry may be interconnected to the processor and/or memory.

In the following description the terms central site and primary network node will be used in an interchangeable manner, also the terms slave site and secondary network node will be used in a likewise interchangeable manner. The respective nodes can comprise actual physical nodes, or represent virtual machines or instances implemented in a virtual environment. The functionality of the embodiments of the proposed technology enables transferring part of e.g. an application, or all of the functionality of the central site or primary network node to a clached slave or secondary node.

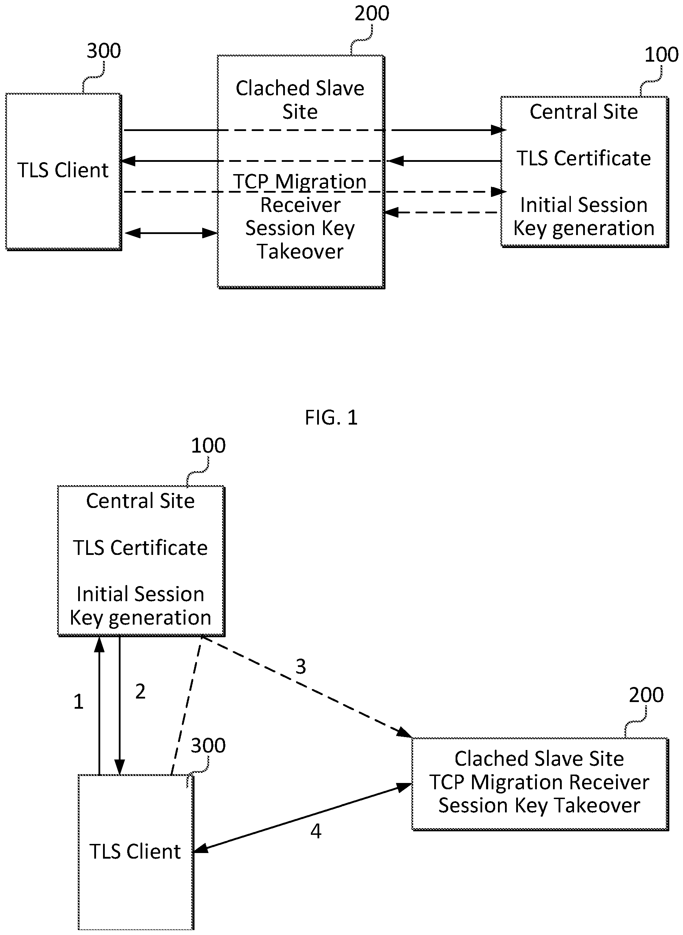

With reference to Figure 1 and Figure 2, embodiments of the proposed technology will be described. In both embodiments, a TLS client or TLS client node 300 is in communication with an operator or central site/primary network node 100. The operator also has a slave site /clached slave site/secondary network node 200 to which the central site 100 can migrate or export applications or services related to the TLS client 300. The TLS client and TLS client node refer to a client, e.g. implemented in a UE, which supports TLS: In its most general form the proposed technology enables migration of an authenticated or verified TLS/TCP session (TLS is running on top of TCP) together with TLS keys or parameters for a particular client to a slave site or secondary network node at which the TCP session can resume with no or minimal interruption for the TLS client and without a new authentication process.

In Figure 1 a TLS client 300 is in communication with a primary network node 100 transparently via a secondary network node 200. In this context the word transparent indicates that the communication passes through the secondary network node 200 but the secondary network node 200 does not take an active part (initially) in the communication. Accordingly, the TLS client 300 performs an authentication handshake with a central site 100 and verifies it for secure communication. All communication between the central site 100 and the client node 300 is thus relayed via the slave site 200. After the handshake has been completed, the central site 100 temporarily suspends or pauses or interrupts or holds the thus verified or authenticated TCP/TLS session (i.e. the TLS session running on top of the TCP) and migrates the session (i.e. the TCP session with the TLS keys) to the slave site 200. It should be noted that TCP/TLS and TLS/TCP are used interchangeably. The slave site 200 receives the temporarily suspended migrated TCP session and resumes it with the TLS client 300. The client will typically be unaware of the migration and will only experience a brief or temporary interruption of the TCP session before it is resumed as before.

In Figure 2 the authentication communication is not relayed via the clached slave 200 site, but rather the clached slave site 200 receives the migrated TCP session and sends an indication to the client node 300 to resume the session on another port or connection.

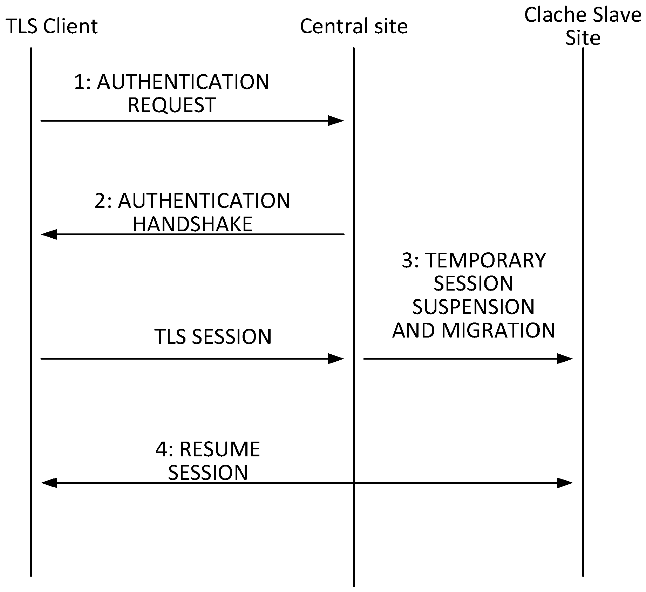

Figure 3 illustrates a signaling chart of an embodiment of the proposed technology. Accordingly, and as illustrated in the previous figure, a TLS client contacts a central site and transmits an authentication request 1 to a central site or server and receives an authentication handshake 2 in return. Thereafter a regular TLS session and exchange of information can commence. At some point in time the central site identifies a need for transferring the session to another resource e.g. a so called clached slave site. Therefore the central site temporarily suspends 3 the TCP session and migrates the TCP session with the TLS keys to the slave site. Finally, the session is un-suspended and is resumed 4 between the client and the slave site using the previously agreed upon TLS parameters, also referred to as TLS keys. The client is typically unaware of this migration of the TLS session.

Basically, normal TLS authentication is performed by a client node against central server where private certificate and keys are stored. The TLS session key(s) is negotiated between client node and server or primary network node and then the TCP-session is frozen or temporarily suspended. The frozen or temporarily suspended session is then migrated to the clache slave node or secondary network node and unfrozen or un-suspended again, where after normal TLS is continued - now between the client node and the clache slave node or secondary network node.

The term "freeze" or temporarily suspend can be interpreted as containing the followings steps. The central site or primary network node stops all communication for the authenticated TCP session and refrains from sending any further information to the TLS client node. All relevant information for the TCP session is stored on the LAN card and forwarded to the clached slave site or secondary network node. The clached slave site or secondary network node copies the information associated with the TCP and resumes the TCP/TLS session with the TLS client node. The interruption of the service to the client is very brief.

The respective central site and the slave site can comprise actual physical sites, or virtual sites in a cloud environment.

Typically, the central site 100 and the slave site 200 are both owned and controlled by the same operator, wherefore the operator can define how the communication between the central site 100 and the slave site 200 should be formatted or secured. According to a further embodiment the proposed technology could comprise a stand-alone module which can be acquired and implemented by an operator, whereby the framework of the functionality could be standardized but still tailored for each particular operator or web-application.

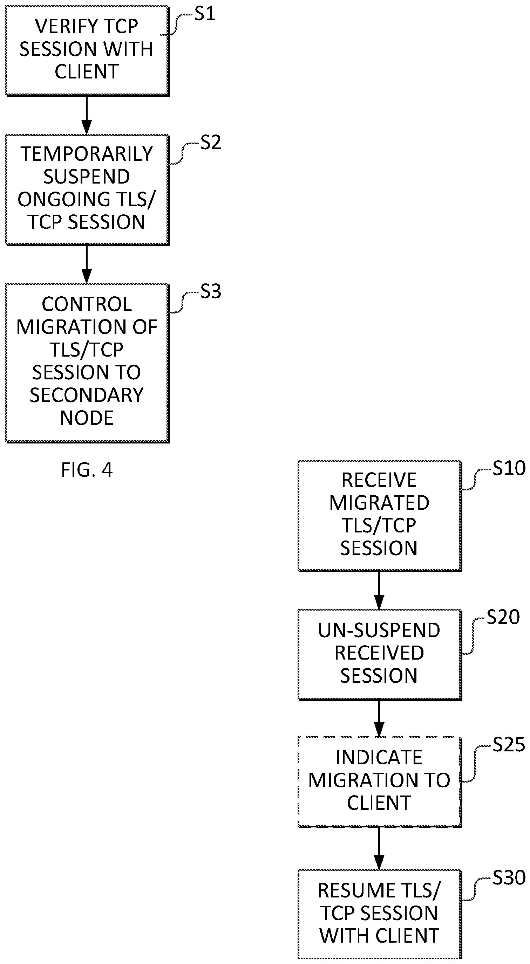

With reference to Figure 4, a particular embodiment of a method in a primary network node 100 for providing a web-service to client nodes 300 will be described. The method comprises verifying, in step S1, a TCP session with a client node 300 and generating TLS keys for the session. Subsequently, and based on some predetermined condition the verified TCP session is temporarily suspended, in step S2, and the migration of the temporarily suspended TCP session and the generated TLS keys for the client node 300 to a secondary network node 200 for resumption of the session with the client node is controlled in step S3.

With reference to Figure 5, an embodiment of a method in secondary network node 200 for providing a web-service to client nodes 300 will be described. The method comprises receiving, in step S10, a migrated temporarily suspended TCP session and generated TLS keys for a session with a client node 300 from a verified primary network node 100, and un-suspending, in step S20, the received migrated temporarily suspended TCP session. Finally, the TCP session is resumed, in step S30, with the client node 300.

According to a particular embodiment, the secondary network node 200 provides, in step S25, an indication about an upcoming TCP session migration to the client node to enable the client node to switch from one port or connection to another to resume the TCP session but now with the secondary network node.

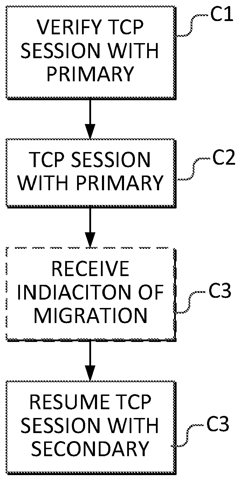

With reference to Figure 6, an embodiment of a method in a client node 300 for receiving a web-service from a primary network node 100 will be described. In the situation described with reference to Figure 1, the client node is typically unaware of the TCP session migration and is not necessarily adapted in any way as compared to prior art client nodes. However, in the situation described with reference to Figure 2 it might be necessary to adapt the client node 300 to enable resuming a migrated TCP session. Consequently, for the second case, the method in the client node 300 comprises verifying, in step C1, the primary network node to set up a TCP session and generate TLS keys. In step C2 the TCP session is initiated with the primary network node 200. At some point in time the primary network node 100 decides to migrate the TCP session according to the previously described embodiments. Thereby, the client node 300 receives, in step C3, an indication of a TCP session migration (either from the secondary network node 200 or from some other node e.g. the primary network node) and the TCP session is resumed, in step C3, based on the provided indication.

It will be appreciated that the methods and devices described herein can be combined and re-arranged in a variety of ways.

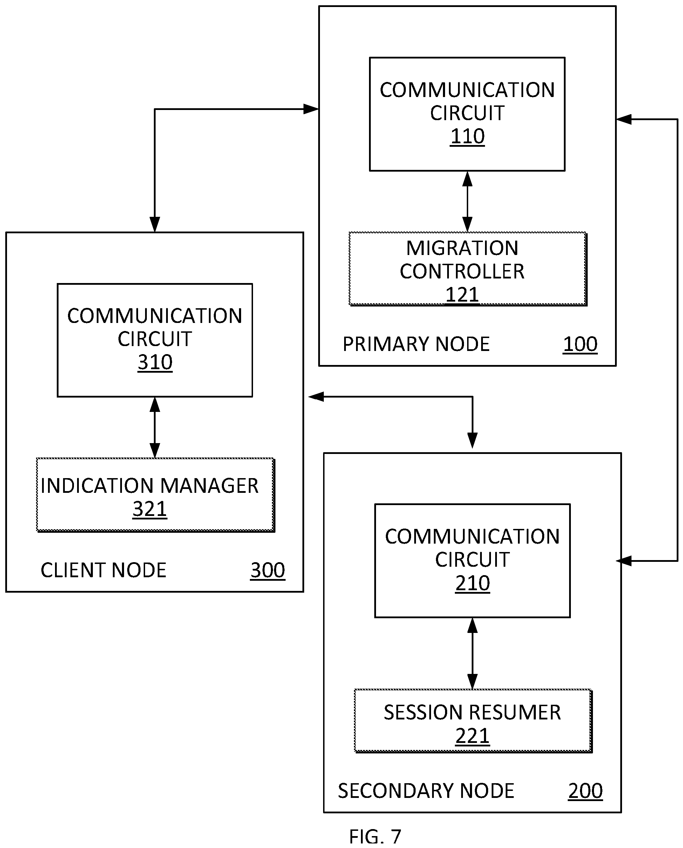

With reference to Figure 7, embodiments of a primary node 100, a secondary node 200 and a client node 300 of the proposed technology will be described.

An embodiment of a central site or server or primary network node 100 is configured to providing a web-service to a client node 200, wherein the primary network node 100 is configured to set up and verify TLS/TCP sessions with the client node 300, and to temporarily suspend an ongoing and verified TCP session with the client node 300, and finally to control migrating the temporarily suspended TCP session to a secondary network node 200) with the initially agreed TLS session keys or parameters where it can then be resumed with the initially agreed TLS session keys or parameters. The functionality or part thereof can be implemented in a migration controller 121.

An embodiment of a slave site or secondary network node 200 is configured to provide a web-service to a client node 300, wherein the secondary network node 200 is configured to receive a migrated temporarily suspended TCP session from a primary network node 100 with initially agreed TLS session keys or parameters, which TCP session has already been authenticated or verified with the client node 300. Further, the secondary network node 200 is configured to un-suspend the received migrated temporarily suspended TCP session, and resume the TCP session with the client node with the initially agreed TLS session keys or parameters. The functionality or part thereof can be implemented in a session resumer 221.

An embodiment of a client node 300 configured to receive a web-service from a primary network node 100, wherein the client node 300 is configured to verify and authenticate TCP/TLS sessions with the network node 100. Further, the client node 300 is configured to receive an indication of a migrated temporarily suspended and verified TCP/TLS session, i.e. the TCP session and the associated TLS keys or parameters, and to resume the temporarily suspended TCP session with a secondary network node 200 based on the received indication. The functionality or part thereof can be implemented in an indication manager 321.

For example, embodiments may be implemented in hardware, or in software for execution by suitable processing circuitry, or a combination thereof.

The steps, functions, procedures, modules and/or blocks described herein may be implemented in hardware using any conventional technology, such as discrete circuit or integrated circuit technology, including both general-purpose electronic circuitry and application-specific circuitry.

Particular examples include one or more suitably configured digital signal processors and other known electronic circuits, e.g. discrete logic gates interconnected to perform a specialized function, or Application Specific Integrated Circuits (ASICs).

Alternatively, at least some of the steps, functions, procedures, modules and/or blocks described herein may be implemented in software such as a computer program for execution by suitable processing circuitry such as one or more processors or processing units.

Examples of processing circuitry includes, but is not limited to, one or more microprocessors, one or more Digital Signal Processors (DSPs), one or more Central Processing Units (CPUs), video acceleration hardware, and/or any suitable programmable logic circuitry such as one or more Field Programmable Gate Arrays (FPGAs), or one or more Programmable Logic Controllers (PLCs).

It should also be understood that it may be possible to re-use the general processing capabilities of any conventional device or unit in which the proposed technology is implemented. It may also be possible to re-use existing software, e.g. by reprogramming of the existing software or by adding new software components.

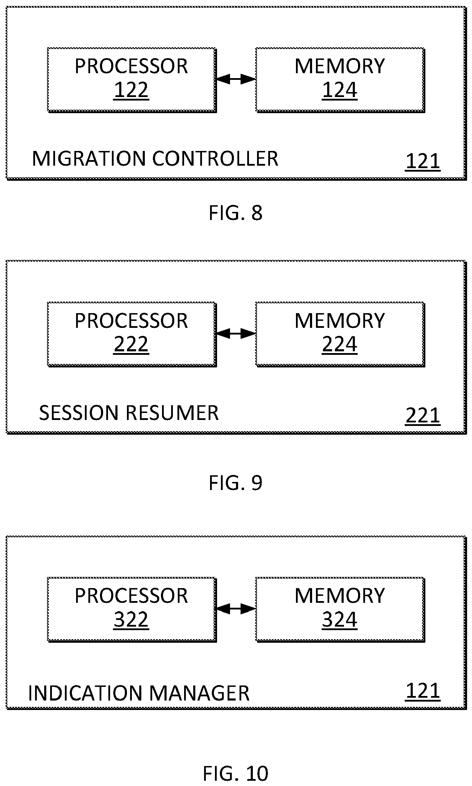

In a particular example, with reference to Figure 8, the migration controller 121 comprises a processor 122 and a memory 124, which memory comprising instructions executable by the processor, whereby the migration controller 121 is operative to control migration of a verified TCP session and TLS keys to a secondary network node. The migration controller 121 is configured to enable all the previously described functionality of the primary network node 100.

In another particular example, with reference to Figure 9, the session resume 221 comprises a processor 222 and a memory 224, which memory comprises instructions executable by the processor, whereby the session resume 221 is operative to receive a migrated TCP session and TLS keys and resume the TCP session with a client node.

The session resumer 221 is configured to enable all the previously described functionality of the secondary network node 200.

In a further particular example, with reference to Figure 10, the indication manager comprises a processor 322 and a memory 324, which memory comprises instructions executable by the processor, whereby the indication manager 321 is operative to receive an indication about a temporarily suspended and migrated TCP session from a secondary node and to resume the TCP session based on that indication.

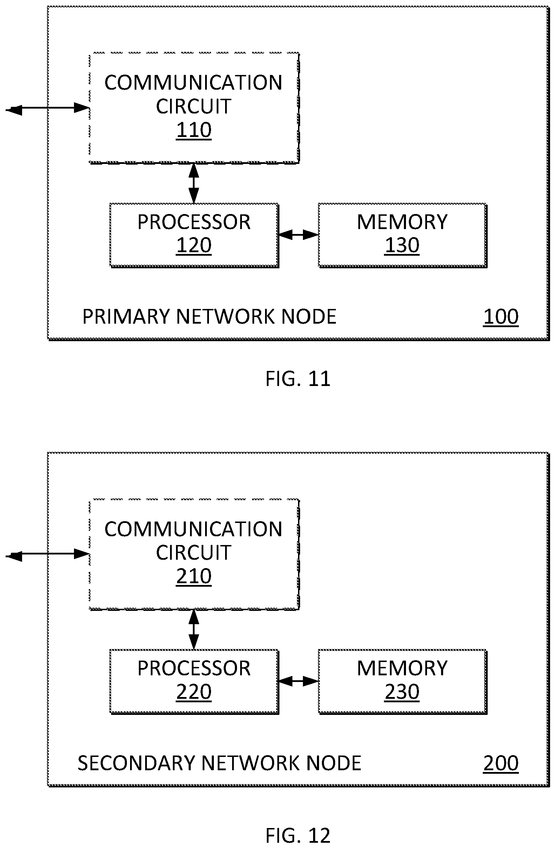

Figures 11 and 12 and Figure 13 are schematic block diagrams illustrating examples of a central site/server/primary network node 100 and a clache slave/slave site/secondary network node 200 and a client node 300 each comprising a processor and an associated memory.

Accordingly, with reference to Figure 11, the network node 100, according to one embodiment, comprises a processor 120 and a memory 130, which memory 130 comprising instructions executable by the processor 120, whereby the processor 120 is operative to set up and verify TCP/TLS sessions with client nodes 300, and to temporarily suspend an ongoing and verified TCP session, and finally to control migrating the temporarily suspended TCP session with the associated TLS keys or parameters to a secondary network node 200.

According to a particular embodiment, the primary network node 100 comprises communication circuitry 110 configured to migrate the temporarily suspended TCP session, i.e. the TCP session with initially agreed TLS session keys or parameters to a secondary network node 200.

The secondary network node 200, with reference to Figure 12, according to one embodiment, comprises a processor 220 and a memory 230, which memory 230 comprising instructions executable by the processor 220, whereby the processor is operative to un-suspend the received migrated temporarily suspended TCP session.

According to a particular embodiment, the secondary network node 200 comprises communication circuitry 210 configured to receive the migrated temporarily suspended TCP session from the primary network node 100, which TCP session being verified with the client node 300 using TLS keys, and to resume the TCP session with the client node 300 using said TLS keys.

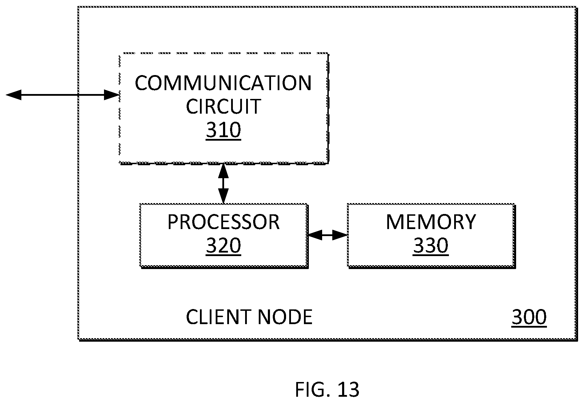

With reference to Figure 13, an embodiment of the client node 300 comprises a processor 320 and a memory 330, which memory 330 comprising instructions executable by the processor 320, whereby the processor 320 is operative to verify the primary network node to set up a TCP session and generate TLS keys, and to initiate the TCP session with the primary network node 200. Further, the processor 320 is operative to manage a received indication of a migration of the TCP session (either from the secondary network node 200 or from some other node e.g. the primary network node) and to resume the TCP session based on the provided indication.

According to a particular embodiment, the client node 300 comprises communication circuitry 310 configured to receive the indication from the secondary network node.

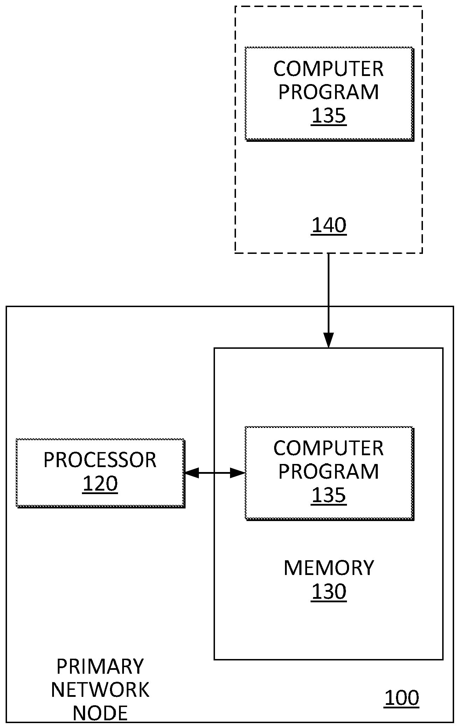

In this particular example, with reference to Figure 14 and Figure 15 and Figure 16, at least some of the steps, functions, procedures, modules and/or blocks described herein are implemented in a computer program, which is loaded into the memory for execution by processing circuitry including one or more processors. The processor(s) and memory are interconnected to each other to enable normal software execution. An optional input/output device may also be interconnected to the processor(s) and/or the memory to enable input and/or output of relevant data such as input parameter(s) and/or resulting output parameter(s).

The term 'processor' should be interpreted in a general sense as any system or device capable of executing program code or computer program instructions to perform a particular processing, determining or computing task.

The processing circuitry including one or more processors is thus configured to perform, when executing the computer program, well-defined processing tasks such as those described herein.

The processing circuitry does not have to be dedicated to only execute the above-described steps, functions, procedure and/or blocks, but may also execute other tasks.

In a particular embodiment, with reference to Figure 14, the computer program comprises instructions, which when executed by at least one processor, cause the processor(s) in the primary network node 100 to verify a TCP session with a client node and generating TLS keys for the session, and temporarily suspending the TCP session, and control migrating the TCP session and TLS keys for the client node to a secondary network node for resumption of the session with the client node

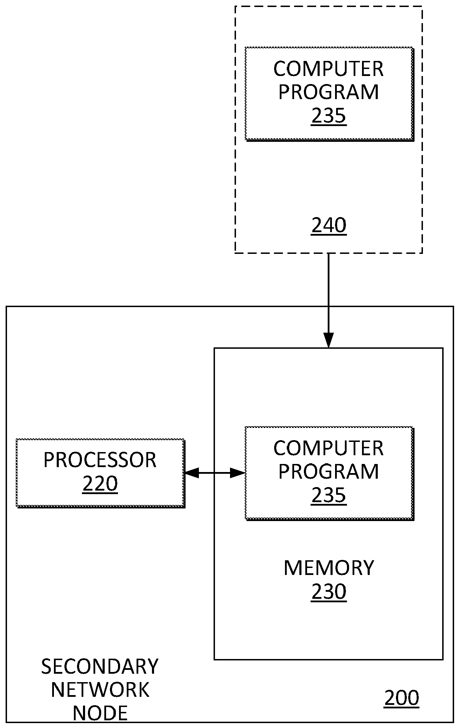

In another particular embodiment, with reference to Figure 15, the computer program comprises instructions, which when executed by at least one processor, cause the processor(s) in the secondary network node to receive a migrated temporarily suspended TCP session from a primary network node, which TCP session being verified with a client node using TLS keys, and to un-suspend the received migrated temporarily suspended TCP session, and to resume the TCP session with the client node using the TLS keys.

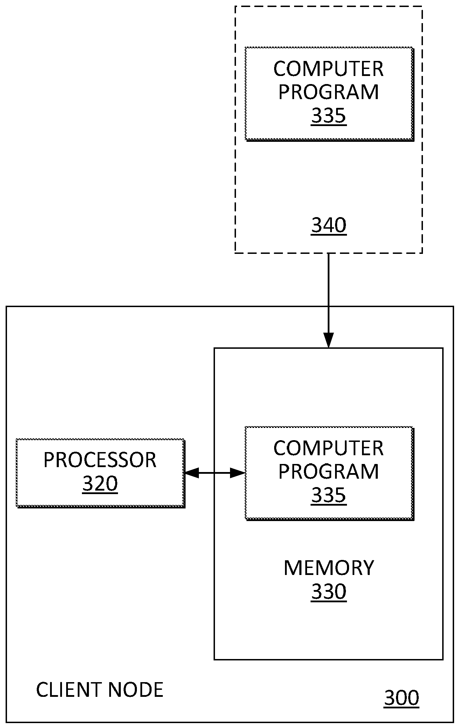

In another particular embodiment, with reference to Figure 16, the computer program comprises instructions, which when executed by at least one processor, cause the processor(s) in the client node 300 to verify a primary network node to set up a TCP session and generate TLS keys, and to receive an indication of a session migration of a temporarily suspended TCP session from the primary network node to a secondary network node, and to resume the temporarily suspended TCP session with the secondary network node based on the received indication.

The proposed technology also provides a carrier comprising the computer program, wherein the carrier is one of an electronic signal, an optical signal, an electromagnetic signal, a magnetic signal, an electric signal, a radio signal, a microwave signal, or a computer-readable storage medium.

By way of example, the software or computer program may be realized as a computer program product, which is normally carried or stored on a computer-readable medium, in particular a non-volatile medium. The computer-readable medium may include one or more removable or non-removable memory devices including, but not limited to a Read-Only Memory (ROM), a Random Access Memory (RAM), a Compact Disc (CD), a Digital Versatile Disc (DVD), a Blu-ray disc, a Universal Serial Bus (USB) memory, a Hard Disk Drive (HDD) storage device, a flash memory, a magnetic tape, or any other conventional memory device. The computer program may thus be loaded into the operating memory of a computer or equivalent processing device for execution by the processing circuitry thereof.

The flow diagram or diagrams presented herein may therefore be regarded as a computer flow diagram or diagrams, when performed by one or more processors. A corresponding primary network node 100 and secondary network node 200 and client node 300 may each be defined as a group of function modules, where each step performed by the processor corresponds to a function module. In this case, the function modules are implemented as a computer program running on the processor. Hence, the primary network node 100 and secondary network node 200 and client node 300 may alternatively be defined as a group of function modules, where the function modules are implemented as a computer program running on at least one processor.

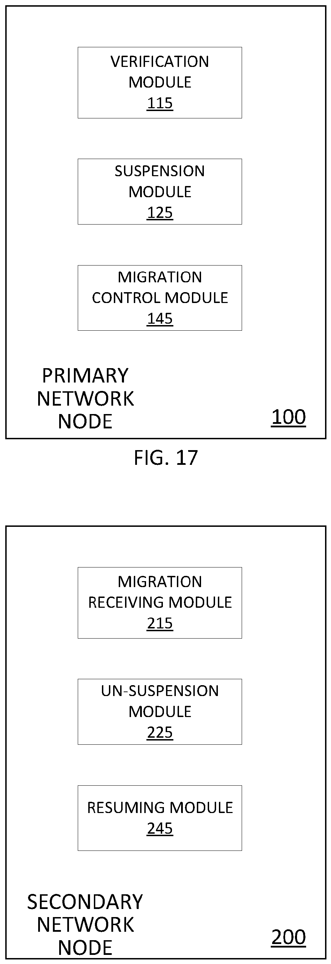

The computer program residing in memory may thus be organized as appropriate function modules configured to perform, when executed by the processor, at least part of the steps and/or tasks described herein. An example of such function modules is illustrated in Figure 17 and Figure 18 and Figure 19.

Figures 17- 19 are schematic block diagrams illustrating an example of a central site/node/server and a clache slave/slave site/node and a client node each comprising a group of function modules.

With reference to Figure 17, an embodiment of a primary network node 100 for providing a web-service to clients comprises a verification functional module 115 for setting up a TCP/TLS session to verify a client node, and a temporarily suspension functional module 125 for temporarily suspending the TCP session, and a migration control functional module 145 for controlling migrating the temporarily suspended TCP session to a secondary network node 200.

With reference to Figure 18, an embodiment of a secondary network node 200 for providing a web-service to a client node 300, comprises a receiving functional module 215 for receiving a migrated temporarily suspended TCP session verified with a client node 300 with initially agreed TLS session keys or parameters, and an un-suspending functional module 225 for un-suspending said migrated temporarily suspended TCP session, and a resuming functional module 245 for resuming said un-suspended TCP session with said client node 300 with initially agreed TLS session keys or parameters.

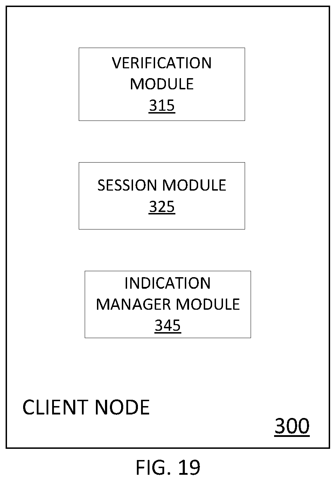

With reference to Figure 19, an embodiment of a client node 300 for receiving a web-service from a primary network node 100 comprises a receiving functional module 315 for verifying the primary network node to set up a TCP session and generate TLS keys, and a receiving functional module 325 for receiving an indication of a session migration of the TCP session from the primary network node to a secondary network node, and a resuming functional module 345 for resuming the migrated temporarily suspended TCP session with the secondary network node based on the received indication.

By utilizing the teachings of the proposed technology it is possible for a server to migrate an authenticated or verified TCP session with a client node to a slave site without necessitating a new authentication or verification process between the slave site and the client node. This enables cloud caching also for a HTTPS/TLS enabled communication system.

The embodiments described above are merely given as examples, and it should be understood that the proposed technology is not limited thereto. It will be understood by those skilled in the art that various modifications, combinations and changes may be made to the embodiments without departing from the present scope as defined by the appended claims. In particular, different part solutions in the different embodiments can be combined in other configurations, where technically possible.

## Claims

1. A method in a primary network node (100) for providing a web-service to clients, said method comprises the steps of:
verifying (S1) a Transport Control Protocol, TCP, session with a client node and generating Transport Layer Security, TLS, keys for said session;
temporarily suspending (S2) said TCP session;
controlling migrating (S3) said TCP session and said generated TLS keys for said client node to a secondary network node (200), said method being **characterised by** the fact that the secondary network node (200) is located geographically closer to said client node than the primary network node (100), for resumption of the session with the client node;
wherein the secondary network node (200) is a cache server.

2. The method according to claim 1, wherein temporarily suspending (S2) comprises stopping all communication for the verified TCP session and refraining from sending any further information to the TLS client node.

3. The method according to claim 2, wherein information for the TCP session is stored on a LAN card and forwarded to a clached slave site or the secondary network node.

4. The method of any of claims 1-3, wherein the primary network node further comprises a web server or a managed server provider, MSP, with extra capabilities to execute slave sites or clached sites typically virtual machines associated with a hypervisor.

5. A system comprising a primary node network node (100) and a secondary network node (200), the primary network node (100) being configured to providing a web-service to a client node (200), **characterized in that** said primary network node (100) is configured to set up and verify Transport Control Protocol, TCP/Transport Layer Security, TLS, sessions with a client node (300);
wherein said primary network node (100) is configured to temporarily suspend an ongoing and verified TCP session, and
wherein said primary network node (100) is configured to control migrating said temporarily suspended TCP session to the secondary network node (200), said system being **characterised by** the secondary network node (200) being located geographically closer to said client node than the primary network (100), with initially agreed TLS session keys,
wherein the secondary network node (200) is a cache server.

6. The system according to claim 5, wherein the primary network node (100) is further configured to stop all communication for the verified TCP session and to refrain from sending any further information to the client node.

7. The system according to claim 6, wherein the primary network is configured to store information for the TCP session on a LAN card and to forward the information to a clached slave site or a secondary network node.

8. The system according to any of claims 5-7, wherein the primary network node further comprises a web server or a managed server provider (MSP) with extra capabilities to execute slave sites or clached sites typically virtual machines associated with a hypervisor.

9. The system according to any of claims 5-8, wherein the network node (100) comprises communication circuitry (110) configured to migrate said temporarily suspended TCP session to a secondary network node (200).

10. A computer program comprising instructions, which when executed by at least one processor, cause the processor(s) to verify a Transport Control Protocol, TCP session with a client node and generating Transport Layer Security, TLS, keys for said session;
temporarily suspending said TCP session;
control migrating said TCP session and TLS keys for said client node to a secondary network node, which is located geographically closer to said client node than the primary network node, for resumption of the session with the client node; **characterized in that** the secondary network node is a cache server

11. A carrier comprising the computer program of claim 10, wherein the carrier is one of an electronic signal, an optical signal, an electromagnetic signal, a magnetic signal, an electric signal, a radio signal, a microwave signal, or a computer-readable storage medium.

## Patentansprüche

1. Verfahren in einem primären Netzwerkknoten (100) zur Bereitstellung eines Webdienstes für Clients, wobei das Verfahren die folgenden Schritte umfasst:
Verifizieren (S1) einer Transportsteuerungsprotokoll, TCP,-Sitzung mit einem Client-Knoten und Generieren von Transportschichtsicherheits, TLS,-Schlüsseln für die Sitzung;
temporäres Unterbrechen (S2) der TCP-Sitzung;
Steuern eines Migrierens (S3) der TCP-Sitzung und der generierten TLS-Schlüssel für den Client-Knoten zu einem sekundären Netzwerkknoten (200) zur Wiederaufnahme der Sitzung mit dem Client-Knoten, wobei das Verfahren durch die Tatsache gekennzeichnet ist, dass der sekundäre Netzwerkknoten (200) geografisch näher zum Client-Knoten als der primäre Netzwerkknoten (100) angeordnet ist;
wobei der sekundäre Netzwerknoten (200) ein Cache-Server ist.

2. Verfahren nach Anspruch 1, wobei das temporäre Unterbrechen (S2) ein Stoppen jeglicher Kommunikation für die verifizierte TCP-Sitzung und Unterlassen des Sendens jeglicher weiterer Informationen an den TLS-Client-Knoten umfasst.

3. Verfahren nach Anspruch 2, wobei Informationen für die TCP-Sitzung auf einer LAN-Karte gespeichert und an eine Cloud-zwischengespeicherte Slave-Site oder den sekundären Netzwerkknoten weitergeleitet werden.

4. Verfahren nach einem der Ansprüche 1 bis 3, wobei der primäre Netzwerkknoten ferner einen Webserver oder einen Anbieter verwalteter Server, MSP, mit zusätzlichen Fähigkeiten zum Ausführen von Slave-Sites oder Cloud-zwischengespeicherten Sites, typischerweise mit einem Hypervisor assoziiert virtuelle Maschinen, umfasst.

5. System, umfassend einen primären Netzwerkknoten (100) und einen sekundären Netzwerkknoten (200), wobei der primäre Netzwerkknoten (100) zum Bereitstellen eines Webdienstes für einen Client-Knoten (200) konfiguriert ist, **dadurch gekennzeichnet, dass** der primäre Netzwerkknoten (100) zum Einrichten und Verifizieren von Transportsteuerungsprotokoll/ Transportschichtsicherheits, TCP/TLS,-Sitzungen mit einem Client-Knoten (300) konfiguriert ist;
wobei der primäre Netzwerkknoten (100) zum temporären Unterbrechen einer laufenden und verifizierten TCP-Sitzung konfiguriert ist, und
wobei der primäre Netzwerkknoten (100) zum Steuern eines Migrierens der temporär unterbrochenen TCP-Sitzung zum sekundären Netzwerkknoten (200) mit anfänglich vereinbarten TLS-Sitzungsschlüsseln konfiguriert ist, wobei das System **dadurch gekennzeichnet ist, dass** der sekundäre Netzwerkknoten (200) geografisch näher zum Client-Knoten als der primäre Netzwerkknoten (100) angeordnet ist, wobei der sekundäre Netzwerkknoten (200) ein Cache-Server ist.

6. System nach Anspruch 5, wobei der primäre Netzwerkknoten (100) ferner zum Stoppen jeglicher Kommunikation für die verifizierte TCP-Sitzung und Unterlassen des Sendens jeglicher weiterer Informationen an den Client-Knoten konfiguriert ist.

7. System nach Anspruch 6, wobei der primäre Netzwerkknoten zum Speichern von Informationen für die TCP-Sitzung auf einer LAN-Karte und zum Weiterleiten der Informationen an eine Cloud-zwischengespeicherte Slave-Site oder einen sekundären Netzwerkknoten konfiguriert ist.

8. System nach einem der Ansprüche 5 bis 7, wobei der primäre Netzwerkknoten ferner einen Webserver oder einen Anbieter verwalteter Server, MSP, mit zusätzlichen Fähigkeiten zum Ausführen von Slave-Sites oder Cloud-zwischengespeicherten Sites, typischerweise mit einem Hypervisor assoziierte virtuelle Maschinen, umfasst.

9. System nach einem der Ansprüche 5 bis 8, wobei der Netzwerkknoten (100) Kommunikationsschaltungsanordnung (110) umfasst, die zum Migrieren der temporär unterbrochenen TCP-Sitzung zu einem sekundären Netzwerkknoten (200) konfiguriert ist.

10. Computerprogramm, umfassend Anweisungen, die bei Ausführung durch mindestens einen Prozessor den (die) Prozessor (en) veranlassen zum Verifizieren einer Transportsteuerungsprotokoll, TCP,-Sitzung mit einem Client-Knoten und Generieren von Transportschichtsicherheits, TLS,-Schlüsseln für die Sitzung;
temporären Unterbrechen der TCP-Sitzung;
Steuern eines Migrierens der TCP-Sitzung und der TLS-Schlüssel für den Client-Knoten zu einem sekundären Netzwerkknoten, der geografisch näher zum Client-Knoten als der primäre Netzwerkknoten angeordnet ist, zur Wiederaufnahme der Sitzung mit dem Client-Knoten;
**dadurch gekennzeichnet, dass** der sekundäre Netzwerknoten ein Cache-Server ist.

11. Datenträger, umfassend das Computerprogramm nach Anspruch 10, wobei der Datenträger eines von einem elektronischen Signal, einem optischen Signal, einem elektromagnetischen Signal, einem magnetischen Signal, einem elektrischen Signal, einem Funksignal, einem Mikrowellensignal oder einem computerlesbaren Speichermedium ist.

## Revendications

1. Procédé dans un noeud de réseau primaire (100) pour fournir un service Web à des clients, ledit procédé comprenant les étapes de :
la vérification (S1) d'une session de protocole de commande de transport, TCP, avec un noeud client et la génération de clés de sécurité de couche de transport, TLS, pour ladite session ;
la suspension provisoire (S2) de ladite session TCP ;
la commande de la migration (S3) de ladite session TCP et desdites clés TLS générées pour ledit noeud client à un noeud de réseau secondaire (200), ledit procédé étant **caractérisé par le fait que** le noeud de réseau secondaire (200) est situé géographiquement plus proche dudit noeud client que du noeud de réseau primaire (100), pour la reprise de la session avec le noeud client ;
dans lequel le noeud de réseau secondaire (200) est un serveur de mémoire cache.

2. Procédé selon la revendication 1, dans lequel la suspension provisoire (S2) comprend l'arrêt de toutes les communications pour la session TCP vérifiée et l'interdiction d'envoyer d'autres informations au noeud client TLS.

3. Procédé selon la revendication 2, dans lequel des informations pour la session TCP sont mémorisées sur une carte LAN et transférées à un site esclave en mémoire cache ou au noeud de réseau secondaire.

4. Procédé selon l'une quelconque des revendications 1 à 3, dans lequel le noeud de réseau primaire comprend en outre un serveur Web ou un fournisseur de serveur géré, MSP, avec des capacités supplémentaires pour exécuter des sites esclaves ou des sites en mémoire cache, généralement des machines virtuelles associées à un hyperviseur.

5. Système comprenant un noeud de réseau primaire (100) et un noeud de réseau secondaire (200), le noeud de réseau primaire (100) étant configuré pour fournir un service Web à un noeud client (200), **caractérisé en ce que** ledit noeud de réseau primaire (100) est configuré pour établir et vérifier des sessions de protocole de commande de transport, TCP/sécurité de couche de transport, TLS, avec un noeud client (300) ;
dans lequel ledit noeud de réseau primaire (100) est configuré pour suspendre provisoirement une session TCP en cours vérifiée, et
dans lequel ledit noeud de réseau primaire (100) est configuré pour commander la migration de ladite session TCP provisoirement suspendue au noeud de réseau secondaire (200), ledit système étant **caractérisé en ce que** le noeud de réseau secondaire (200) est situé géographiquement plus près dudit noeud client que ledit noeud de réseau primaire (100), avec des clés de session TLS initialement convenues, dans lequel le noeud de réseau secondaire (200) est un serveur de mémoire cache.

6. Système selon la revendication 5, dans lequel le noeud de réseau primaire (100) est en outre configuré pour l'arrêt de toutes les communications pour la session TCP vérifiée et l'interdiction d'envoyer d'autres informations au noeud client.

7. Système selon la revendication 6, dans lequel le noeud de réseau primaire est configuré pour la mémorisation d'informations pour la session TCP sur une carte LAN et le transfert des informations à un site esclave en mémoire cache ou au noeud de réseau secondaire.

8. Système selon l'une quelconque des revendications 5 à 7, dans lequel le noeud de réseau primaire comprend en outre un serveur Web ou un fournisseur de serveur géré, MSP, avec des capacités supplémentaires pour exécuter des sites esclaves ou des sites en mémoire cache, généralement des machines virtuelles associées à un hyperviseur.

9. Système selon l'une quelconque des revendications 5 à 8, dans lequel le noeud de réseau (100) comprend une circuiterie de communication (110) configurée pour la migration de ladite session TCP provisoirement suspendue à un noeud de réseau secondaire (200).

10. Programme informatique comprenant des instructions qui, lorsqu'elles sont exécutées par au moins un processeur, amènent l'au moins un processeur à effectuer la vérification d'une session de protocole de commande de transport, TCP, avec un noeud client et la génération de clés de sécurité de couche de transport, TLS, pour ladite session ;
la suspension provisoire de ladite session TCP ;
la commande de la migration de ladite session TCP et desdites clés TLS générées pour ledit noeud client à un noeud de réseau secondaire, qui est situé géographiquement plus proche dudit noeud client que du noeud de réseau primaire, pour la reprise de la session avec le noeud client ; **caractérisé en ce que** le noeud de réseau secondaire est un serveur de mémoire cache.

11. Porteuse comprenant le programme informatique selon la revendication 10, dans laquelle la porteuse est l'un d'un signal électronique, d'un signal optique, d'un signal électromagnétique, d'un signal magnétique, d'un signal électrique, d'un signal radio, d'un signal micro-ondes ou d'un support de mémorisation lisible par ordinateur.
